# EUROPÄISCHE PATENTANMELDUNG

(11) **EP 3 930 157 A1**
(43) Veröffentlichungstag der Anmeldung: **29.12.2021**
(21) Anmeldenummer: 20181397.9
(22) Anmeldetag: 22.06.2020
(51) Int. Cl.: H02K 15/02, B23K 26/00

(54) **VERFAHREN ZUR KORREKTUR EINES TEILBEREICHS EINER MATERIALLAGE, MATERIALLAGE, DYNAMOELEKTRISCHE MASCHINE**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Die Erfindung betrifft Verfahren zur Korrektur eines Teilbereichs, insbesondere eines Zahns (3), einer Materiallage (1), wobei die Materiallage (1) eine Lagendicke (d) zwischen 0,5 und 500 µm, insbesondere zwischen 10 und 100 µm, aufweist, wobei die Materiallage (1) ein weichmagnetisches Material aufweist, mit folgenden Schritten: Ermittlung einer Ist-Geometrie (16), vorzugsweise mittels einer optischen Einheit, Vergleich der ermittelten Ist-Geometrie (16) mit einer Soll-Geometrie (17), Bestimmung einer Abweichung der Ist-Geometrie (16) von der Soll-Geometrie (17), partielles Aufschmelzen der Materiallage (1) mittels einer Lichtquelle (13) zur Korrektur der Abweichung. Die Erfindung betrifft ferner eine Materiallage (1), ein Materiallagengefüge (221) sowie eine dynamoelektrische Maschine (20).

## Beschreibung

Die Erfindung betrifft ein Verfahren zur Korrektur einer Materiallage.

In der Patentschrift EP 3595148 A1 wird ein Verfahren zur Herstellung einer Materiallage mit einer Lagendicke zwischen 0,5 und 500 µm mit folgenden Schritten beschrieben: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Auf diese Weise hergestellte Materiallagen weisen meist höhere geometrische Toleranzen auf als konventionelle, insbesondere mittels Stanzen hergestellte, Bleche bzw. Magnetbleche. Insbesondere eine Lagetoleranz der Zähne bzw. Einzelzähne führt zu Problemen. Bei einer Aneinanderreihung von Materiallagen, insbesondere Stapeln, zu einem Materiallagengefüge führt eine Abweichung von Ist-Positionen und/oder Ist-Geometrien der Zähne von Soll-Positionen und/oder Soll-Geometrien u.a. dazu, dass die Zähne der einzelnen Materiallagen nicht deckungsgleich übereinander liegen und somit im Materiallagengefüge eine lichte Weite eines zwischen den Zähnen befindlichen Nutkanals abnimmt und somit weniger stromführendes Material, insbesondere Kupferspulen, eingebracht werden kann.

Der Erfindung liegt die Aufgabe zugrunde, ein Materiallagengefüge für einen Stator einer dynamoelektrischen Maschine zu verbessern.

Die Lösung der Aufgabe gelingt durch Anspruch 1, d.h. ein Verfahren zur Korrektur eines Teilbereichs, insbesondere eines Zahns, einer Materiallage, wobei die Materiallageeine Lagendicke zwischen 0,5 und 500 µm, insbesondere zwischen 10 und 100 µm, aufweist, wobei die Materiallage ein weichmagnetisches Material aufweist, mit folgenden Schritten:
- Ermittlung einer Ist-Geometrie, vorzugsweise mittels einer optischen Einheit,
- Vergleich der ermittelten Ist-Geometrie mit einer Soll-Geometrie,
- Bestimmung einer Abweichung der Ist-Geometrie von der Soll-Geometrie,
- partielles Aufschmelzen der Materiallage mittels einer Lichtquelle zur Korrektur der Abweichung.

Die optische Einheit kann eine optische Vermessungseinheit sein. Die optische Einheit ist vorzugsweise ein Scanner. Die optische Einheit kann jedoch auch als Kamera ausgeführt sein. Auch andere Ausführungen der optischen Einheit sind denkbar.

Die Materiallage hat vorteilhaft die bisherigen Funktionen eines konventionellen Blechs in einem konventionellen Blechpaket inne und nimmt die Aufgaben eines Blechs wahr.

Vorteilhaft entspricht ein Umriss der Materiallage im Wesentlichen dem Umriss eines Blechs.

Die Materiallage ist vorteilhaft dünner als ein konventionelles Blech.

Das Materiallagengefüge hat vorteilhaft die bisherigen Funktionen eines Blechpakets inne und nimmt die Aufgaben eines Blechpakets wahr.

Die Materiallagen sind zur Schaffung des Materiallagengefüges übereinander angeordnet. Vorzugsweise sind die Materiallagen in Richtung einer Rotationsache, in anderen Worten: entlang einer Rotationsachse, des Materiallagengefüges angeordnet.

In einer vorteilhaften Ausführungsform ist die Lichtquelle ein Laser.

Die Korrektur erfolgt hierbei vorzugsweise mittels Laserstrahl-Umformen. Dies bietet den Vorteil, dass eine selektive Korrektur möglich ist.

Vorzugsweise wird ein Verzug, welcher beim Aufschmelzen von Material und einem anschließenden Wiedererstarren auftritt, ausgenutzt, um eine Geometrieänderung zu erzielen. Vorteilhaft wird ein Zahnfuß partiell derart aufgeschmolzen, dass der beim Widererstarren auftretende Verzug dergestalt ist, dass sich ein Zahnkopf, vorzugsweise unter Beachtung einer maximalen Toleranz von weniger als 5 µm, insbesondere weniger als 2 µm, an die Soll-Geometrie angleicht.

In einer vorteilhaften Ausführungsform der Erfindung wird die Materiallage an einem Zahnfuß (in anderen Worten: im Bereich des Zahnfußes) aufgeschmolzen. Dies dient insbesondere einer Drehung des Zahnkopfes. Der Zahnfuß ist ein Bereich, an welchem der Zahn in das Joch übergeht. Auch am Zahnhals (in anderen Worten: Zahnflanke), also zwischen Zahnfuß und Zahnkopf, kann Material aufgeschmolzen werden.

Auch andere Bereiche der Materiallage können zur Änderung einer Geometrie und/oder Position aufgeschmolzen werden.

In einer weiteren vorteilhaften Ausführungsform ist die Lichtquelle eine LED.

Auch ein Elektronenstrahl kann als Lichtquelle eingesetzt werden. Es sind auch andere Lichtquellen denkbar, die ein Aufschmelzen bzw. eine plastische Verformung ermöglichen.

Als Lichtquelle kann auch ein Maser eingesetzt werden. Es ist auch denkbar, andere Quellen, die elektromagnetische Wellen aussenden, zu nutzen. Es können auch gebündelte elektromagnetische Wellen genutzt werden.

In einer weiteren vorteilhaften Ausführungsform wird die Materiallage vor dem partiellen Aufschmelzen durch eine weitere Lichtquelle partiell erwärmt. Diese Vorwärmung gelingt vorteilhaft mit einem Laser und/oder einer LED. Auch andere Lichtquellen sind denkbar.

Es ist auch denkbar, dass eine Umgebungstemperatur zwischen 200°C und 600°C, vorzugsweise zwischen 300°C und 500°C vorliegt und die Materiallage auf diese Weise erwärmt wird (z. B. in einem Ofen).

Die weitere Lichtquelle ist vorzugsweise eine Vorwärm-Lichtquelle, die oben erläuterte Lichtquelle ist vorzugsweise eine Aufschmelz-Lichtquelle.

Es ist auch möglich, dass nur eine kombinierte Lichtquelle die Funktion der Vorwärm-Lichtquelle und die Funktion der Aufschmelz-Lichtquelle übernimmt.

In einer vorteilhaften Ausführungsform weist die Lichtquelle eine Strahlintensität zwischen 80 kW/ cm² und 120 kW/cm², insbesondere zwischen 90 kW/ cm² und 110 kW/ cm², auf.

Die genannten Werte orientieren sich vorteilhaft an einem Material der Materiallage, insbesondere an einer Wärmeleitfähigkeit des Materials.

Vorteilhaft weist die Lichtquelle eine Fokusgröße zwischen 0,005 mm und 10 mm, vorzugsweise zwischen 50 µm und 150 µm, auf.

Die Fokusgröße entspricht hierbei einem Durchmesser der Lichtquelle, im Augenblick eines Auftreffens auf der Materiallage. Die Fokusgröße ist vorteilhaft kleiner als die Lagendicke der Materiallage.

Vorteilhaft weist die Lichtquelle eine Einwirkdauer zwischen 0,1 ms und 100 ms auf.

Vorzugsweise pulsiert die Lichtquelle während der Einwirkdauer. D. h. während der Einwirkdauer sendet die Lichtquelle wenigstens zwei Lichtpulse aus. Ein Lichtpuls hat z. B. eine Pulsdauer zwischen 1 fs und 100 ps.

Diese Eigenschaften führen zu einem optimalen Verzug des Materials.

In einer vorteilhaften Ausführungsform weist die weitere Lichtquelle eine Strahlintensität zwischen 1 kW/cm² und 10 kW/cm² auf.

Vorteilhaft weist die weitere Lichtquelle eine Fokusgröße zwischen 1 mm und 5 cm, vorzugsweise zwischen 1 cm und 5 cm, auf.

Vorteilhaft weist die weitere Lichtquelle eine Einwirkdauer zwischen 1 ms und 100 ms auf.

Die weitere Lichtquelle pulsiert vorzugsweise nicht. Vorzugsweise sind Vorwärmung und Aufschmelzung synchron, d. h. die Einwirkdauer der weiteren Lichtquelle (Vorwärm-Lichtquelle) und die Einwirkdauer der Lichtquelle (Aufschmelz-Lichtquelle) sind wenigstens im Wesentlichen gleich lang.

Die genannten Eigenschaften der weiteren Lichtquelle beim Vorwärmen bieten den Vorteil, dass eine Eindringtiefe eines durch die Aufschmelz-Lichtquelle hervorgerufenen Schmelzbades erhöht wird.

Bei höheren Temperaturen verbessert sich zudem eine Absorption der Strahlung der Aufschmelz-Lichtquelle durch das Material, eine notwendige Strahlintensität und Einwirkdauer können somit reduziert werden.

Die Lösung der oben gestellten Aufgabe gelingt ferner durch Anspruch 13, d. h. eine Materiallage, korrigiert nach einem derartigen Verfahren, wobei die Materiallage eine Lagendicke zwischen 0,5 und 500 µm, insbesondere zwischen 10 und 100 µm, aufweist.

Vorzugsweise weist die korrigierte Materiallage auf wenigstens einer Lagenseite ein Isolationsmaterial auf. Vorteilhaft wird das Verfahren zur Korrektur vor einer Aufbringung von Isolationsmaterial durchgeführt. Jedoch ist es auch möglich, das Verfahren zur Korrektur nach der Aufbringung von Isolationsmaterial durchzuführen.

Beispielsweise ist das weichmagnetische Material Eisen, Nickel, Kobalt und/oder deren Legierungen. Es sind jedoch auch andere magnetisch leitfähige, insbesondere ferromagnetische, Materialien denkbar.

Das Isolationsmaterial ist vorzugsweise Lack, insbesondere Backlack. Das Isolationsmaterial, insbesondere der Backlack, und die Materiallage sind vorzugsweise stoffschlüssig verbunden.

In einer alternativen Ausführungsform ist das Isolationsmaterial Keramik. Auch andere Isolationsmaterialien sind möglich.

Die Lösung der oben gestellten Aufgabe gelingt zudem durch Anspruch 14, d. h. ein Materiallagengefüge für eine dynamoelektrische Maschine, wobei das Materiallagengefüge eine Mehrzahl übereinander angeordneter Materiallagen aufweist.

Überdies gelingt die Lösung der Aufgabe durch Anspruch 15, d. h. eine dynamoelektrische Maschine, aufweisend ein derartiges Materiallagengefüge.

Die Erfindung eignet sich sowohl für dynamoelektrische rotatorische Maschinen als auch für Linearmaschinen, insbesondere Linearmotoren.

Die Erfindung bietet den Vorteil, dass durch eine einzelzahnspezifische Verringerung der Lagetoleranzen eine Maßhaltigkeit deutlich erhöht wird. Dies wiederum bietet den Vorteil, dass ein Aufbau von Materiallagengefügen vereinfacht und sogar automatisiert werden kann.

Ein weiterer Vorteil liegt darin, dass Materiallagen, welche insbesondere nach einem in der Patentschrift EP 3 595 148 A1 beschriebenen Verfahren hergestellt wurden, durch die Erfindung zu Materiallagengefügen zusammengesetzt werden können, die nur geringe Toleranzen aufweisen, wodurch eine geringere Drehmomentwelligkeit bei dynamoelektrischen Maschinen erreicht werden kann. Zudem ermöglichen derartige Materiallagengefüge eine hohe Leistung der dynamoelektrischen Maschine. Zudem sind derartige Maschinen leise und schwingungsarm.

Die Erfindung bietet zudem den Vorteil, dass die Korrektur mittels Lichtquelle designunabhängig und universell einsetzbar ist. Das beschriebene Verfahren ist überdies kostengünstig und schnell und zudem auch für Großserien anwendbar.

Eine Assemblierung des Materiallagengefüges sowie der dynamoelektrischen Maschine wird durch die Erfindung deutlich erleichtert.

Die Erfindung eignet sich besonders gut für Maschinen, insbesondere Motoren, die eine hohe Leistung bei geringem Gewicht fordern, insbesondere bei Flugzeugen, Helikoptern und Rennwagen der Formel E. Die Erfindung eignet sich auch für Anwendungen, bei welchen Maschinen auf Traversen bewegt werden und daher besonders leicht sein sollen. Hierzu zählen mitunter Exoskelette, Roboter und allgemein hängende Achsen.

Die Erfindung eignet sich für sämtliche Maschinenarten, die Materiallagen aufweisen. Hierzu zählen insbesondere Asynchronmaschinen, Synchronmaschinen und Reluktanzmaschinen.

Im Folgenden wird die Erfindung anhand der in den Figuren gezeigten Ausführungsbeispiele näher beschrieben und erläutert. Es zeigen:
- FIG 1: einen möglichen Ablauf des erfindungsgemäßen Verfahrens,
- FIG 2: ein mögliches Verfahren zur Ermittlung einer IstGeometrie eines Teilbereichs,
- FIG 3: ein partielles Aufschmelzen,
- FIG 4: einen Zahn vor einer Korrektur,
- FIG 5: den Zahn nach einer Korrektur und
- FIG 6: eine dynamoelektrische rotatorische Maschine.

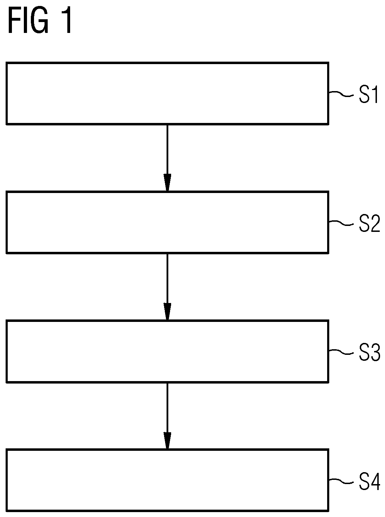

FIG 1 zeigt einen möglichen Ablauf des erfindungsgemäßen Verfahrens zur Korrektur eines Teilbereichs einer Materiallage 1.

Der Teilbereich ist vorzugsweise ein Zahn einer Materiallage.

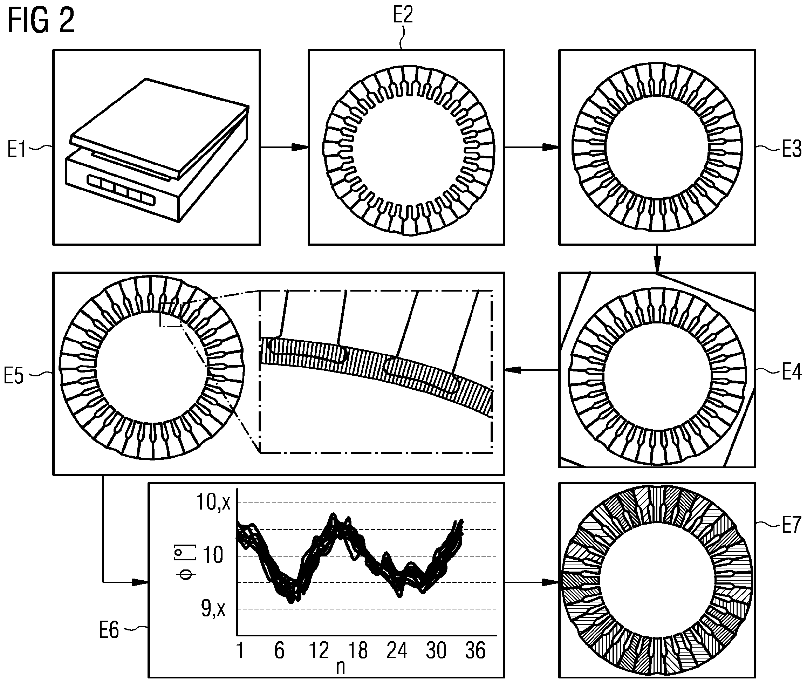

In einem Verfahrensschritt S1 erfolgt eine Ermittlung einer Ist-Geometrie des Teilbereichs mittels einer optischen Einheit. Die Ermittlung der Ist-Geometrie wird in FIG 2 näher beschrieben.

In einem Verfahrensschritt S2 erfolgt ein Vergleich der ermittelten Ist-Geometrie mit einer Soll-Geometrie.

In einem Verfahrensschritt S3 wird eine Abweichung der Ist-Geometrie von der Soll-Geometrie bestimmt.

In einem Verfahrensschritt S4 erfolgt ein partielles Aufschmelzen der Materiallage mittels einer Lichtquelle. Bevorzugt ist die Lichtquelle hierbei als Laser ausgeführt, es ist jedoch auch möglich, dass das partielle Aufschmelzen mittels einer LED erfolgt.

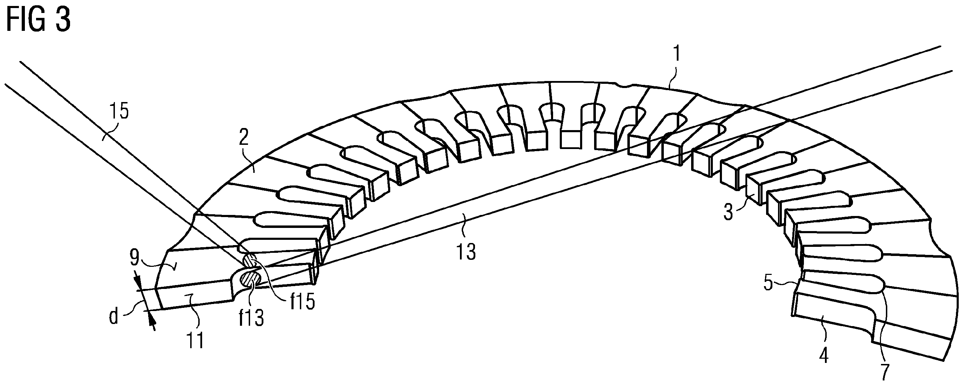

Das partielle Aufschmelzen wird in FIG 3 näher beschrieben.

FIG 2 zeigt ein mögliches Verfahren zur Ermittlung der Ist-Geometrie des Teilbereichs.

Die Ermittlung der Ist-Geometrie gelingt mittels einer optischen Einheit. Es kann beispielsweise ein Flachbett-Scanner oder ein Linien-Scanner oder auch eine Kamera eingesetzt werden. Auch andere Scanner oder Geräte, die eine Darstellung mittels eines bildgebenden Verfahrens ermöglichen, sind geeignet.

Ein Scanner bietet den Vorteil, dass das zu vermessene Bauteil mit einer hohen Auflösung auf einer großen Fläche besonders gut abgebildet werden kann. Beispielsweise können Details im Bereich zwischen 10⁻² und 10⁻³ mm aufgenommen und auf einer Fläche zwischen 10⁴ und 10⁵ mm² wiedergegeben werden.

In einem Verfahrensschritt E1 wird mit der optischen Einheit, insbesondere mit einem Scanner, eine Materiallage vermessen.

In einem Verfahrensschritt E2 wird eine Rohdatei der Materiallage erzeugt. Es handelt sich hierbei vorteilhaft um ein Rohbild der Materiallage vor einem vorzugsweise einfarbigen und/oder matten Hintergrund.

In einem Verfahrensschritt E3 wird die Rohdatei, insbesondere farbbasiert, freigestellt und binärisiert. Vorteilhaft wird die Datei in ein Schwarz/Weiß-Bild umgewandelt.

Optional kann das resultierende Bild danach anhand einer Markierungsmarke im Verfahrensschritt E4 ausgerichtet werden.

In einem Verfahrensschritt E5 wird durch Ermittlung der Schwarz/Weiß-Übergänge die Ist-Geometrie wenigstens eines Zahns, vorzugsweise eines jeden Zahns, bestimmt.

In einem Verfahrensschritt E6 wird eine Abweichung gegenüber einer Soll-Geometrie quantifiziert und in Verfahrensschritt

E7 visualisiert. Es können bei diesem Verfahren Fehlstellungen erkannt werden, die kleiner als 5 µm sind.

FIG 3 zeigt das partielle Aufschmelzen.

Die Figur zeigt einen Ausschnitt einer Materiallage 1, die für einen Stator 22 einer dynamoelektrischen Maschine 20 geeignet ist.

Die Materiallage 1 weist eine Lagendicke d zwischen 0,5 und 500 µm auf, insbesondere zwischen 10 und 100 µm. Die Materiallage 1 weist ein weichmagnetisches Material auf. Die Materiallage 1 kann auf wenigstens einer Lagenseite ein Isolationsmaterial 2 aufweisen.

Die Figur zeigt eine Mehrzahl an Zähnen 3. Jeder Zahn 3 weist einen Zahnkopf 5, einen Zahnhals 4 und einen Zahnfuß 7 auf. Die Figur zeigt ferner eine Stirnfläche 9 sowie eine Mantelfläche 11. In der Figur sind zudem ein Richt-Laserstrahl 13 sowie ein Vorwärm-Laserstrahl 15 gezeigt.

Der Richt-Lasterstrahl 13 in der Figur ist die oben erläuterte Lichtquelle bzw. Aufschmelz-Lichtquelle. Es kann auch eine andersartige Lichtquelle eingesetzt werden, z. B. eine LED.

Der Vorwärm-Lasterstrahl 15 in der Figur ist die oben erläuterte weitere Lichtquelle bzw. Vorwärm-Lichtquelle. Es kann auch eine andersartige Lichtquelle eingesetzt werden, z. B. eine LED.

Partielle Fehlstellungen, insbesondere der Zähne, werden mittels des Richt-Laserstrahls 13 selektiv korrigiert. Hierbei wird ein beim Aufschmelzen mittels des Richt-Laserstrahls 13 und einem anschließenden Wiedererstarren des Materials auftretender Verzug ausgenutzt, um eine Formänderung zu erzielen.

Um beispielsweise einen Zahn 3 in der Materiallagenebene zu drehen und korrekt auszurichten, wird im Bereich des Zahnfußes 7 ein Richt-Laserstrahl 13 mit einer Fokusgröße f13 mit vorzugsweise geringer Strahlungsintensität (vorteilhaft bis ca. 100 kW pro cm²) auf die Mantelfläche 11 fokussiert und das Material einmal oder mehrmals punktuell oder flächig aufgeschmolzen. Hierbei ist ein kleiner Verzug im Bereich des Zahnfußes ausreichend, um eine hinreichend große Drehung des Zahnkopfes 5 zu bewirken.

Die Stärke der Drehung kann hierbei über verschiedene Größen gesteuert werden, beispielsweise über die Laserintensität, Fokusgröße und/oder Einwirkdauer. Die Fokusgröße entspricht hierbei einem Durchmesser der jeweiligen Lichtquelle im Augenblick eines Auftreffens auf der Materiallage. Die Fokusgröße ist vorteilhaft kleiner als die Lagendicke der Materiallage.

Optional kann der Bereich des Zahnfußes 7 über den Vorwärm-Laserstrahl 15 mit einer Fokusgröße f15 vorgewärmt werden. Der Vorwärm-Laserstrahl 15 zielt vorzugsweise auf die Stirnfläche 9, wie in der Figur gezeigt. Dadurch gelingt eine noch höhere Eindringtiefe des Schmelzbades.

Durch den Richt-Laserstrahl 13 sowie den optionalen Vorwärm-Laserstrahl 15 ist ein gezieltes Richten der Materiallage möglich. Es können Fehlstellungen von beispielsweise 100 µm auf weniger als 20 µm korrigiert werden.

Die Ausführungen zu Figur 3 gelten ebenso für andere Lichtquellen, wie beispielsweise LEDs.

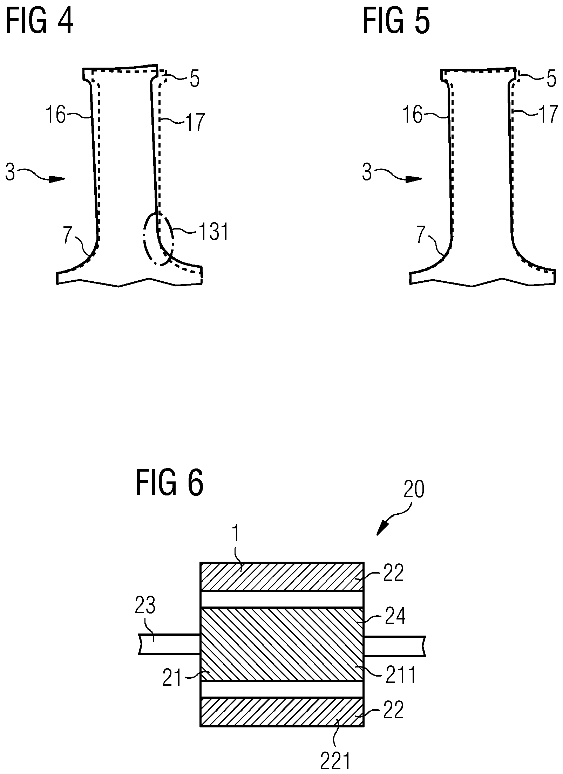

FIG 4 zeigt den Zahn 3 vor der Korrektur. FIG 5 zeigt den Zahn 3 nach der Korrektur.

Die beiden Figuren zeigen den Zahn 3 aufweisend den Zahnkopf 5 und den Zahnfuß 7.

Ferner zeigen die beiden Figuren eine Ist-Geometrie 16 sowie eine Soll-Geometrie 17.

In FIG 4 ist zudem eine Einwirkzone des Richtlasers 131 gezeigt. In FIG 4 ist ein deutliches Abweichen der Ist-Geometrie 16 von der Soll-Geometrie 17 gezeigt, bevor der Richt-Laserstrahl 13 einwirkt.

In FIG 5 ist deutlich gezeigt, dass die Ist-Geometrie 16 des korrigierten Zahnes 3 nur noch eine sehr geringe und mitunter zu vernachlässigende Abweichung gegenüber der Soll-Geometrie 17 aufweist. Der Vorher-Nachher-Vergleich aus den FIG 4 und 5 zeigt, wie das Einwirken des Lasers am Zahnfuß 7 eine Drehung des Zahnkopfes 5 ermöglicht.

FIG 6 zeigt eine dynamoelektrische rotatorische Maschine 20, aufweisend einen Rotor 21, einen Stator 22 sowie eine Welle 23.

Der Stator 22 weist vorzugsweise eine Mehrzahl an Materiallagen 1 auf. Diese sind als ein Stator-Materiallagengefüge 221 angeordnet.

Der Rotor 21 weist eine Mehrzahl an Materiallagen 24 auf. Diese sind als ein Rotor-Materiallagengefüge 211 angeordnet.

Die Materiallagen 24 können eine ähnliche Korrektur mit dem beschriebenen Verfahren erfahren. Beispielsweise kann die Erfindung für eine Korrektur von Materiallagen genuteter Rotoren angewendet werden oder auch zur Formänderung von Taschen für innenliegende Permanentmagnete. Zudem kann eine Rundheit von Reluktanzrotoren verbessert werden, um einen gleichmäßigen Luftspalt zu erreichen.

## Patentansprüche

1. Verfahren zur Korrektur eines Teilbereichs, insbesondere eines Zahns (3), einer Materiallage (1), wobei die Materiallage (1) eine Lagendicke (d) zwischen 0,5 und 500 µm, insbesondere zwischen 10 und 100 µm, aufweist, wobei die Materiallage (1) ein weichmagnetisches Material aufweist, mit folgenden Schritten:
- Ermittlung einer Ist-Geometrie (16), vorzugsweise mittels einer optischen Einheit,
- Vergleich der ermittelten Ist-Geometrie (16) mit einer Soll-Geometrie (17),
- Bestimmung einer Abweichung der Ist-Geometrie (16) von der Soll-Geometrie (17),
- partielles Aufschmelzen der Materiallage (1) mittels einer Lichtquelle (13) zur Korrektur der Abweichung.

2. Verfahren nach Anspruch 1, wobei die Lichtquelle (13) ein Laser ist.

3. Verfahren nach Anspruch 1, wobei die Lichtquelle (13) eine LED ist.

4. Verfahren nach einem der vorhergehenden Ansprüche, wobei die Materiallage (1) an einem Zahnfuß (7) des Zahns (3) aufgeschmolzen wird.

5. Verfahren nach einem der vorhergehenden Ansprüche, wobei die Materiallage (1) vor dem partiellen Aufschmelzen durch eine weitere Lichtquelle (15) partiell erwärmt wird.

6. Verfahren nach einem der vorhergehenden Ansprüche, wobei die Lichtquelle (13) eine Strahlintensität von zwischen 80 kW/cm² und 120 kW/cm², insbesondere zwischen 90 kW/cm² und 110 kW/cm², aufweist.

7. Verfahren nach einem der Ansprüche 5 oder 6, wobei die weitere Lichtquelle (15) eine Strahlintensität zwischen 1 kW/cm² und 10 kW/cm² aufweist.

8. Verfahren nach einem der Ansprüche 4 bis 7, wobei der Zahnfuß (7) partiell derart aufgeschmolzen wird, dass ein beim Widererstarren auftretender Verzug dergestalt ist, dass sich ein Zahnkopf (5) des Zahns (3) an die Soll-Geometrie (17) angleicht.

9. Verfahren nach einem der vorhergehenden Ansprüche, wobei die Lichtquelle (13) eine Fokusgröße (f13) zwischen 0,005 mm und 10 mm, vorzugsweise zwischen 50 µm und 150 µm, aufweist.

10. Verfahren nach einem der Ansprüche 5 bis 9, wobei die weitere Lichtquelle (15) eine Fokusgröße (f15) zwischen 1 mm und 5 cm, vorzugsweise zwischen 1 cm und 5 cm, aufweist.

11. Verfahren nach einem der vorhergehenden Ansprüche, wobei die Lichtquelle (13) eine Einwirkdauer zwischen 0,1 ms und 100 ms aufweist.

12. Verfahren nach einem der Ansprüche 5 bis 11, wobei die weitere Lichtquelle (15) eine Einwirkdauer zwischen 1 ms und 100 ms aufweist.

13. Materiallage (1), korrigiert nach einem Verfahren der Ansprüche 1 bis 12, wobei die Materiallage (1) eine Lagendicke (d) zwischen 0,5 und 500 µm, insbesondere zwischen 10 und 100 µm, aufweist, wobei die Materiallage (1) ein weichmagnetisches Material aufweist.

14. Materiallagengefüge (221) für eine dynamoelektrische Maschine (20), wobei das Materiallagengefüge (221) eine Mehrzahl übereinander angeordneter Materiallagen (1) nach Anspruch 13 aufweist.

15. Dynamoelektrische Maschine (20), aufweisend ein Materiallagengefüge (221) nach Anspruch 14.
